# EUROPEAN PATENT APPLICATION

(11) **EP 3 869 901 A1**
(43) Date of publication of application: **25.08.2021**
(21) Application number: 20158823.3
(22) Date of filing: 21.02.2020
(51) Int. Cl.: H04W 74/08, H04W 74/00, H04W 72/04

(54) **COMMUNICATION APPARATUS AND NETWORK NODE FOR SMALL DATA TRANSMISSION DURING RANDOM ACCESS APPLYING A TRANSPORT BLOCK SIZE RESTRICTION**

(71) Applicant: Panasonic Intellectual Property Corporation of America, Torrance, CA 90503 (US)
(72) Inventor: SHAH, Rikin, 63225 Langen (DE); TAO, Ming-Hung, 63225 Langen (DE); SUZUKI, Hidetoshi, Osaka-shi, Osaka 540-6207 (JP)
(74) Representative: Grünecker Patent- und Rechtsanwälte PartG mbB

(57) **Abstract**

Provided are a communication apparatus, a network node, and corresponding methods. The communication apparatus comprises a transceiver, which, in operation, receives a configuration of a transport block (TB) size for data of a logical channel to be transmitted during a random access procedure including at least one of a TB size restriction per logical channel, and a TB size restriction per random access procedure type out of a first random access procedure type and a second random access procedure type, the first random access procedure type having a lower number of transmission steps; and circuitry, which, in operation, performs, based on the received configuration of the TB size, a selection the TB size and/or the random access procedure type for transmission of the data of the logical channel, wherein the transceiver, in operation, performs the transmission of the data of the logical channel in accordance with the selection.

## Description

### BACKGROUND

### 1. Technical Field

The present disclosure relates to transmission and reception of signals in a communication system. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE, LTE-A, and NR, further modifications and options may facilitate efficient operation of the communication system as well as particular devices pertaining to the system.

### SUMMARY

One non-limiting and exemplary embodiment facilitates collision avoidance among uplink transmissions of random access procedures.

In an embodiment, the techniques disclosed herein feature a communication apparatus, comprising a transceiver, which, in operation, receives a configuration of a transport block, TB, size for data of a logical channel to be transmitted during a random access procedure, the configuration of the TB size including at least one of a TB size restriction per logical channel, and a TB size restriction per random access procedure type out of a first random access procedure type and a second random access procedure type, the first random access procedure type having a lower number of transmission steps than the second random access procedure type; and circuitry, which, in operation, performs, based on the received configuration of the TB size, a selection of at least one of the TB size and the random access procedure type for transmission of the data of the logical channel, wherein the transceiver, in operation, performs the transmission of the data of the logical channel in accordance with the selection.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing which shows functional split between NG-RAN and 5GC,
- **Fig. 3**: is a sequence diagram for RRC connection setup/reconfiguration procedures,
- **Fig. 4**: is a schematic drawing showing usage scenarios of Enhanced mobile broadband (eMBB), Massive Machine Type Communications (mMTC) and Ultra Reliable and Low Latency Communications (URLLC),
- **Fig. 5**: is a block diagram showing an exemplary 5G system architecture for a non-roaming scenario,
- **Fig. 6**: is a diagram showing a procedure for moving a UE from RRC_INACTIVE to RRC_CONNECTED state;
- **Fig. 7**: is a diagram showing a four-step random access procedure for uplink data transmission;
- **Fig. 8**: is a diagram showing a two-step random access procedure for uplink data transmission;
- **Fig. 9**: is a block diagram of a network node and a communication apparatus;
- **Fig. 10**: is a block diagram showing network communication apparatus circuitry
- **Fig. 11**: is a flow chart of a communication method for a communication network and a network node;
- **Fig. 12**: is a flow chart of a communication method for a communication apparatus;
- **Fig. 13**: is a flow chart of a communication method for a communication apparatus;
- **Fig. 14**: is a flow chart of a communication method for a communication apparatus;
- **Fig. 15**: is a flow chart of a communication method for a network node; and
- **Fig. 16**: is a flow chart of a communication method for a communication apparatus.

### DETAILED DESCRIPTION

### 5G NR system architecture and protocol stacks

3GPP has been working at the next release for the 5^{th} generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

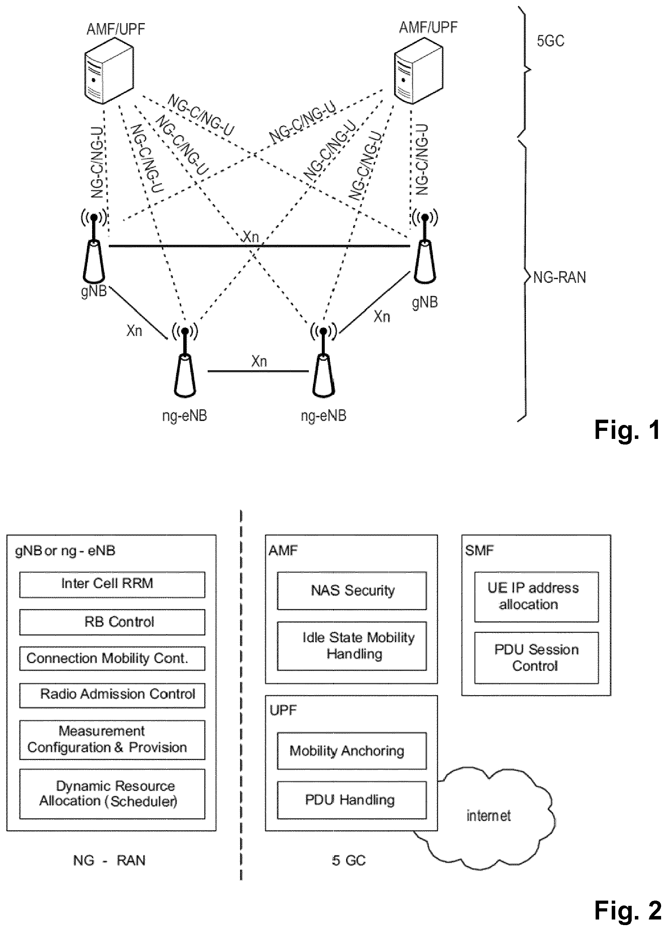

Among other things, the overall system architecture assumes an NG-RAN (Next Generation - Radio Access Network) that comprises gNBs (gNodeB), providing the NG-radio access user plane (SDAP/PDCP/RLC/MAC/PHY) and control plane (RRC, Radio Resource Control) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0).

### 5G NR functional split between NG-RAN and 5GC

**Fig. 2** illustrates functional split between NG-RAN and 5GC. NG-RAN logical node is a gNB or ng-eNB (next generation eNB). The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from theAMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

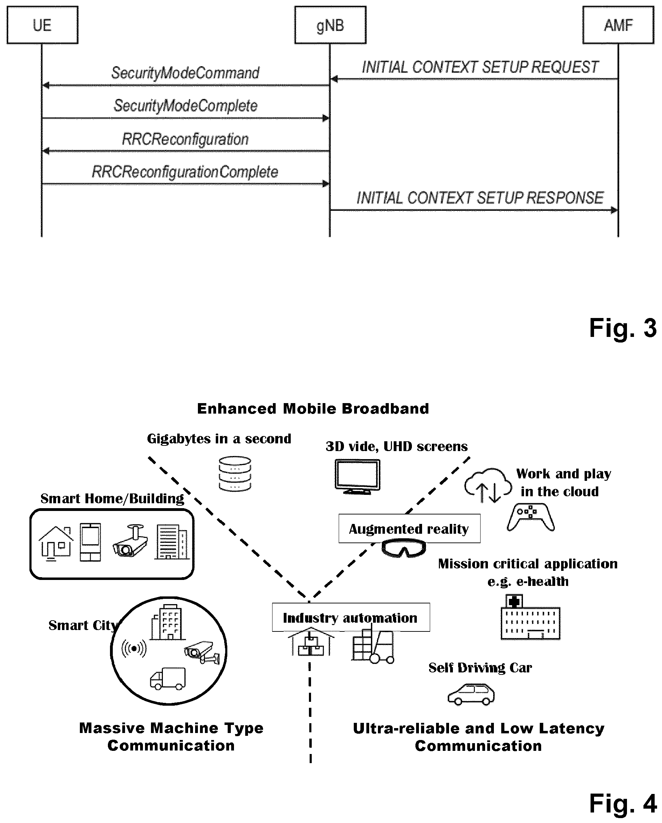

**Fig. 3** illustrates some interactions between a UE, gNB, and AMF (an 5GC entity) in the context of a transition of the UE from RRC_IDLE to RRC_CONNECTED for the NAS part (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for exampleAMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### Usage Scenarios of IMT for 2020 and beyond

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. Fig. 2 of ITU-R M.2083).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI (Downlink Control Information) formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁻⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from the physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

In slot-based scheduling or assignment, a slot corresponds to the timing granularity (TTI - transmission time interval) for scheduling assignment. In general, TTI determines the timing granularity for scheduling assignment. One TTI is the time interval in which given signals is mapped to the physical layer. For instance, conventionally, the TTI length can vary from 14-symbols (slot-based scheduling) to 2-symbols (non-slot based scheduling). Downlink (DL) and uplink (UL) transmissions are specified to be organized into frames (10 ms duration) consisting of 10 subframes (1 ms duration). In slot-based transmission, a subframe is further divided into slots, the number of slots being defined by the numerology / subcarrier spacing. The specified values range between 10 slots per frame (1 slot per subframe) for a subcarrier spacing of 15 kHz to 80 slots per frame (8 slots per subframe) for a subcarrier spacing of 120 kHz. The number of OFDM symbols per slot is 14 for normal cyclic prefix and 12 for extended cyclic prefix (see section 4.1 (general frame structure), 4.2 (Numerologies), 4.3.1 (frames and subframes) and 4.3.2 (slots) of the 3GPP TS 38.211 V15.3.0, Physical channels and modulation, 2018-09). However, assignment of time resources for transmission may also be non-slot based. In particular, the TTIs in non slot-based assignment may correspond to mini-slots rather than slots. I.e., one or more mini-slots may be assign to a requested transmission of data/control signaling. In non slot-based assignment, the minimum length of a TTI may for instance be 1 or 2 OFDM symbols.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

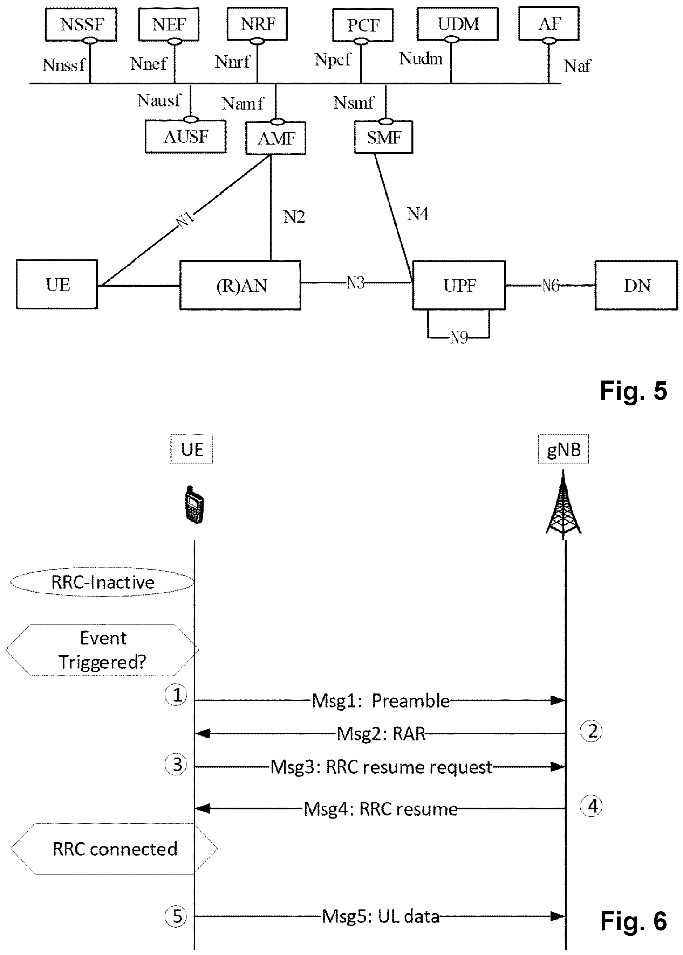

**Fig. 5** illustrates a 5G NR non-roaming reference architecture (see TS 23.501 v16.1.0, section 4.23). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF,UPF, etc) of the 5GC to establish a PDU session including a radio bearer between a gNodeB and a UE in accordance with the QoS requirement and control circuitry, which, in operation, performs the services using the established PDU session.

A terminal is referred to in the LTE and NR as a user equipment (UE). This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay.

A base station is a network node or scheduling node, e.g. forming a part of the network for providing services to terminals. A base station is a network node, which provides wireless access to terminals.

### RRC states

In wireless communication systems including NR, a device (e.g. UE) can be in different states depending on traffic activity. In NR, a device can be in one of three RRC states, RRC_IDLE, RRC_ACTIVE, and RRC_INACTIVE. The first two RRC states, RRC_IDLE and RRC_CONNECTED, are similar to the counterparts in LTE, while RRC_INACTIVE is a new state introduced in NR and not present in the original LTE design. There are also core network states, CN_IDLE and CN_CONNECTED, depending on whether the device has established a connection with the core network or not.

In RRC_IDLE, there is no RRC context - that is, the parameters necessary for communication between the device and the network - in the radio-access network and the device does not belong to a specific cell. From a core network perspective, the device is in the CN_IDLE state. No data transfer may take place as the device sleeps most of the time to reduce battery consumption. In the downlink, devices in idle state periodically wake up to receive paging messages, if any, from the network. Mobility is handled by the device through cell reselection. Uplink synchronization is not maintained and hence the only uplink transmission activity that may take place is random access, to move to a connected state. As part of moving to a connected state, the RRC context is established in both the device and the network.

In RRC_CONNECTED, the RRC context is established and all parameters necessary for communication between the device and the radio-access network are known to both entities. From a core network perspective, the device is in the CN_CONNECTED state. The cell to which the device belongs is known and an identity of the device, the Cell Radio-Network Temporary Identifier (C-RNTI), used for signaling purposes between the device and the network, has been configured. The connected state is intended for data transfer to/from the device, but discontinuous reception (DRX) can be configured to reduce device power consumption. Since there is an RRC context established in the gNB in the connected state, leaving DRX and starting to receive/transmit data is relatively fast as no connection setup with its associated signaling is needed. Mobility is managed by the radio-access network, that is, the device provides neighboring-cell measurements to the network which commands the device to perform a handover when relevant. Uplink time alignment may or may not exist but need to be established using random access and maintained for data transmission to take place.

In LTE, only idle and connected states are supported. A common case in practice is to use the idle state as the primary sleep state to reduce the device power consumption. However, as frequent transmission of small packets is common for many smartphone applications, the result is a significant amount of idle-to-active transitions in the core network. These transitions come at a cost in terms of signaling load and associated delays. Therefore, to reduce the signaling load and in general reduce the latency, a third state is defined in NR, the RRC_INACTIVE state.

In RRC_INACTIVE, the RRC context is kept in both the device and the gNB. The core network connection is also kept, that is, the device is in CN_CONNECTED from a core network perspective. Hence, transition to connected state for data transfer is fast. No core network signaling is needed. The RRC context is already in place in the network and idle-to-active transitions can be handled in the radio-access network. At the same time, the device is allowed to sleep in a similar way as in the idle state and mobility is handled through cell reselection, that is, without involvement of the network. Accordingly, the mobility of the communication apparatus or device is device controlled rather than network controlled, and the communication apparatus is capable of contacting the network through random access. Thus, RRC_INACTIVE can be seen as a mix of the idle and connected states (for further details, see E. Dahlman, et al., 5GNR: The Next Generation Wireless Access Technology, 1st Edition, sections 6.5.1 to 6.5.3).

As described above, NR supports RRC_INACTIVE state. UEs with infrequent (periodic and/or non-periodic data transmission are generally maintained by the network in RRC_INACTIVE state.

Until NR Release 16, the RRC_INACTIVE state does not support data transmission. Hence, for any UL data transmission, the UE has to move from RRC_INACTIVE state to RRC_CONNRCTED state. A sequence of messages exchanged between UE and gNB for moving the UE from RRC_INACTIVE to RRC_CONNRCTED involves the following messages 1-5, as shown in **Fig. 6****:**
1) Msg1: PRACH (Physical Random Access Channel)
2) Msg2: RAR (Random Access Response)
3) Msg3: RRC response request
4) Msg4: RRC resume
5) Msg5, which can be used for UL data.

Accordingly, the UL transmission and the required transition from RRC_INACTIVE to RRC_CONNECTED require five or more messages and may therefore be associated with additional power consumption, increased latency, and signaling overhead.

Accordingly, it may be considered to allow small data transmission, where the UE is enabled to transmit UL small data without changing the UE state. Objects in NR small data transmission include UL small data transmissions for RACH (Random Access Channel) based schemes such as two-step RACH (or RACH procedure or random access procedure) and four-step RACH. Work on small data transmission may include providing a general procedure to enable user plane data transmission for small data packets from RCC_INACTIVE state (e.g. using MsgA or Msg3) as well as enabling flexible payload sizes larger than Release 16 CCCH (Common Control Channel) message size, which may support user plane data transmission in UL (the actual payload size may be up to the network configuration). Work on small data transmission may further include context fetch and data forwarding (with or without anchor relocation) in RRC_INACTIVE state for RACH-based approaches.

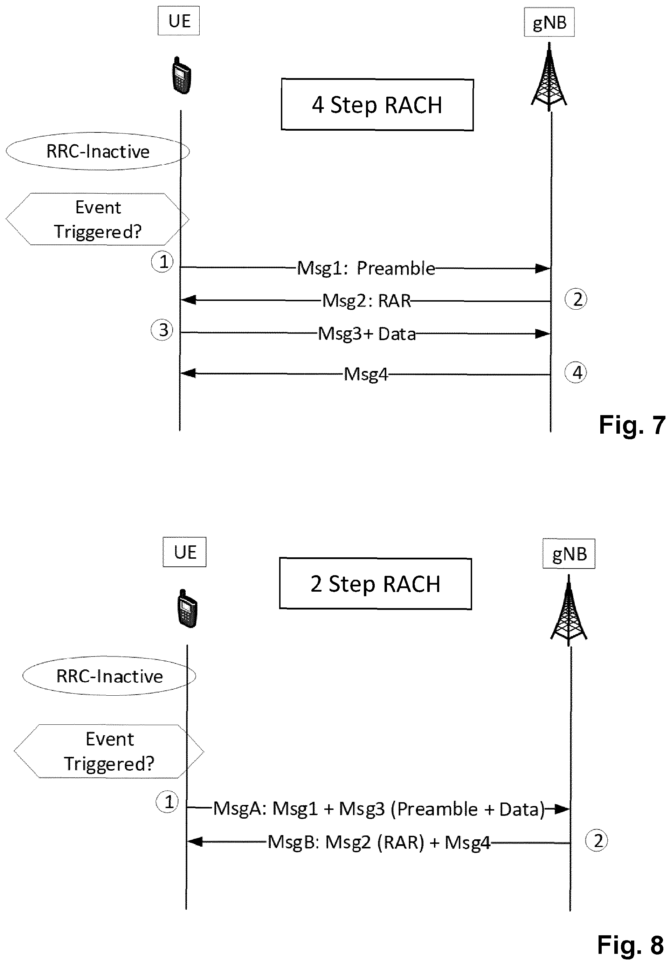

Examples of the above-mentioned four-step random-access procedure (or "4-step RACH") and two-step random access (or "2-step RACH") procedures are shown in **Figures 7 and 8****.** As can be seen from Fig. 8, for the two-step random access procedure, the data is transmitted with the preamble in MsgA (message A corresponding to step (1)), and RAR is transmitted with Msg4 (RRC resume) in MsgB (step (2)). On the other hand, in the four-step RACH procedure shown in Fig. 8, Preamble and data (steps (1) and (3)) as well as Msg2/RAR and Msg4 (steps(2) and (4)) are transmitted in separate steps. Furthermore, for the different random access procedures, different preambles may be transmitted. For instance, when a network node or gNB receives a preamble associated with the 2-step RACH, it knows that the data has been transmitted with the preamble in MsgA.

In accordance with the present disclosure, in order to allow small data transmission in RACH procedure, the network or network node may be enabled to configure multiple transport block (TB sizes) for PUSCH transmission (e.g. small data transmission or small user data transmission), which are associated respectively with RACH preambles. E.g., each one of different TB sizes is associated with or corresponds to a specific RACH preamble, as illustrated by Table 1.

**Table 1**

| **TB Size(bits)** | **RACH preamble** |
|---|---|
| X₁ | Z₁ |
| X₂ | Z₂ |
| X₃ | Z₃ |
| .... | .... |

Accordingly, a UE may select a TB size (and, accordingly, the corresponding preamble) based on the data volume of data which is to be transmitted. For instance, if a UE has a data volume Y to transmit, which fits into TB size X₁ from Table 1, it selects RACH preamble Z₁. Furthermore, in case of the four-step RACH, the network may provide the desired TB size in Msg3. E.g, X₁=100 bits, X₂=200 bits, X₃=300 bits. For RACH preambles, see for example, 3GPP TS 38.211 V15.6.0 (2019-06), 3rd Generation Partnership Project; Technical Specification Group Radio Access Network; NR; Physical channels and modulation (Release 15), Table 6.3.3.2-2: Random access configurations for FR1 and paired spectrum/supplementary uplink and section 6.3.3.2, "Mapping to physical resources".

However, it may occur that multiple UEs, e.g. two UEs UE1 and UE2, both have a large size of data volume in the buffer to send. In this case, both UEs may select the same preamble associated with a large TB in the same TB transmission opportunity. As a result, the TB transmissions of UE1 and UE2 may collide. For instance, the TB transmissions of UE1 and UE2 may have different priorities, i.e. UE1 having a high priority and UE2 having a lower priority.

If PUSCH collision occurs in the above-described small data transmission in the RACH procedure between transmitting UEs, this collision may directly impact the performance of the UEs and may possibly reduce the overall system performance as well.

The present disclosure provides techniques for the handling of small data transmission. These techniques include configuring the UE with a restriction from the network, to prevent the use of an inappropriately large TB for, e.g., low priority data. Thereby, the restriction is based on at least one or more of a priority level, a TB size, and a random access type such as 2-step RACH or 4-step RACH.

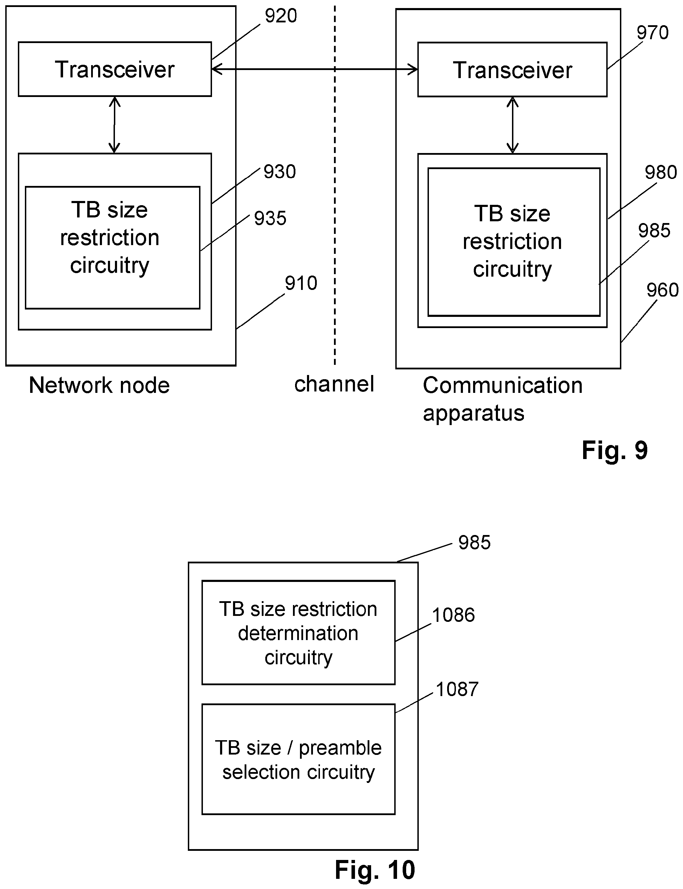

Provided is a communication apparatus 960, as shown in **Fig. 9****,** comprising a transceiver 970 and circuitry (e.g. processing and/or control circuitry 980. The transceiver 970 (also referred to as "UE transceiver"), in operation, receives a configuration of a transport block (TB) size for data from a logical channel (LCH). The received TB size configuration includes a TB size restriction and, in particular, includes at least one of a TB size restriction per logical channel and a TB size restriction per random access procedure type (also referred to as "RACH type"). The circuitry (also referred to as "UE circuitry"), in operation, performs, based on the received configuration of the TB size, a selection of at least one of the TB size and the random access type for the transmission of the data for the logical channel. The UE transceiver 970, in operation, performs the transmission of the data of the logical channel in accordance with the selection.

The communication apparatus 960 performs communication with a network node over a wireless channel in a wireless or cellular communication system. For instance, the communication apparatus 960 is a UE in 3GPP NR.

The data of the logical channel may be data, which is available in the buffer for a transmission. For instance, the data of the logical channel is user plane data which is received by the MAC layer of the communication apparatus 970 via the logical channel from RLC before being processed in a random access (RACH) procedure for the transmission.

The TB size restriction per logical channel may be included, respectively, in the configuration of each logical channel the UE is configured to use. Thus, the TB size restriction may be specific for the respective logical channels. E.g., out of a set or of available TB sizes provided by the system, the TB size configuration restricts transmissions of the respective logical channel to a subset or a range of TB sizes or to a particular TB size. For instance, the configuration of the TB size restriction is included at least partially in RRC signaling.

The TB size restriction per random access procedure is a TB size restriction per random access type (or RACH type) out of one or more random access types including a first random access type and a second random access type, wherein the first random access procedure has a lower number of steps than the second random access procedure. For instance, the one or more random access types may include the above-described 2-step RACH and 4-step RACH. On the one hand, a transmission of a given TB size and/or logical channel may be restricted to be performed with a particular RACH type. On the other hand, a RACH type may be restricted to use a subset of available TB sizes. Both kinds of TB size restriction per random access procedure may be configured simultaneously, possibly in combination with the TB size restriction for a logical channel.

The UE circuitry 980, in operation, performs a selection of at least one of the TB size and the random access procedure. If the configured TB size restriction includes a TB size restriction per logical channel, the UE circuitry 980 performs a selection of the TB size for the transmission of the data of the logical channel. If the configured TB size restriction includes a TB size restriction per random access procedure type, the UE circuitry 980 selects the random access procedure, e.g., in accordance with a TB size of the data to be transmitted.

For instance, the UE circuitry 980 includes TB size restriction circuitry 985. Exemplary TB size restriction circuitry 985 is depicted in **Fig. 10****,** including TB size restriction determination circuitry 1086 and TB size selection circuitry 1087 (or preamble selection circuitry or TB size and preamble selection circuitry).

The transmission of data of the logical channel is performed within a random access procedure. The data is transmitted with a TB size corresponding complying with the TB size restriction, e.g., a TB size which is still permitted when the TB size restriction is enforced for the logical channel of the transmission, or the data is transmitted using a random access type complying with the TB size restriction. Either one of TB size and random access type, or both of TB size and random access type, may be chosen in based on the TB size restriction, depending on the kinds of TB size restriction provided by the embodiments of this disclosure. For instance, the first random access procedure type is the two-step random access procedure type (or two-step RACH type), and the second random access procedure is the four-step random access procedure type (four-step RACH).

For instance, the random access procedure is performed while the UE is in RRC_INACTIVE state or a similar state where RRC context and core network connection are established, but the mobility of the communication apparatus or device is device controlled rather than network controlled, e.g. controlled through cell reselection, and the communication apparatus is capable of contacting the network through random access. The transmission may be a small data transmission in RRC_INACTIVE described above.

Further provided is a network node 910, which is also shown in Fig. 9, and which performs communication with the communication apparatus 960 other over a wireless channel in a wireless communication system, as mentioned above.

The network node 910 comprises circuitry 930 (also referred to as "network node circuitry", for distinction from the UE circuitry 980), which, in operation determines a configuration of a TB size for data of the logical channel to be transmitted by the communication apparatus, in accordance with the description of the configuration of the TB size provided above in the context of the communication apparatus. The network node 910 further comprises a transceiver 920 which, in operation, transmits the configuration of the TB size for the data of the logical channel and receives the data of the logical channel, the TB size of the data of the logical channel complying with the transmitted configuration.

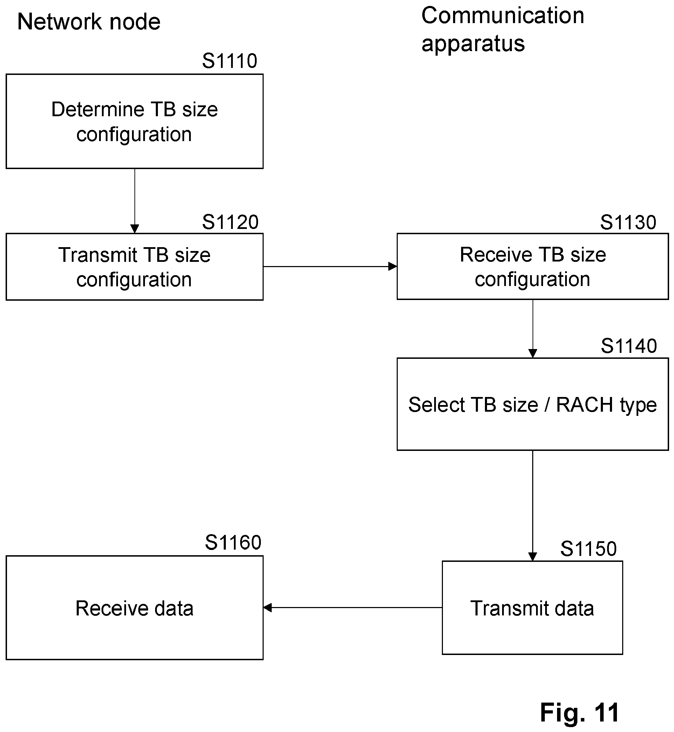

In correspondence with the communication apparatus 960 and network node 910, provided is a method for a communication apparatus and a method for a network node, the steps of which are illustrated in **Fig. 11****.** Namely, the network node performs step S1110 of determining a TB size configuration corresponding to the configuration of a TB size of data of a logical channel described above in the description of the communication apparatus 960. Then, the network node performs step S1120 of transmitting the configuration of the TB size to the communication apparatus which, in return, receives the configuration in step S1130. Based on the received configuration, the communication apparatus performs, in step S1140, a selection of at least one of the TB size and the random access procedure type for transmission of the data of the logical channel. The communication apparatus further performs step S1150 of transmitting the data of the logical channel in accordance with the selection, to be received by the network node in step S1160.

Embodiments and examples in described in the present disclosure are applicable to each of the communication apparatus, the network node, and corresponding methods, unless explicit statement or the context indicates otherwise.

By providing methods and apparatuses described herein, the present disclosure facilitates reducing the risk of collision of uplink transmission in a random access procedure. For instance, TB size restriction may be configured in view of the priority of the respective logical channel. Accordingly, larger TBs can be restricted to be used only for higher priority data and/or latency critical data. As a result, collision avoidance may be facilitated, or the probability of collision reduced, when a UE sends a transmission on a larger TB.

As mentioned, TB sizes for uplink data transmission may be associated with corresponding RACH preambles. Moreover, different random access procedure types such as 2-step RACH and four-step RACH may be associated with different RACH preambles. Accordingly, in some embodiments, the UE circuitry 960, in operation, selects, for the transmission of the logical channel, a preamble, which has a one-to-one correspondence with at least one of the TB size and the RCH type. For instance, for each RACH type, there are respective preambles known to communication apparatus 960 and network node 910 that correspond to the different selectable TB sizes. Accordingly, the network node 910 knows, by receiving and processing the preamble, which RACH type is used for the transmission, and further knows the size of the transmitted TB.

In some embodiments, the configuration of the TB size includes an indication that indicates the TB size restriction, which is included in a UE specific configuration per logical channel. For instance, one or more logical channels are configured for a UE, the configuration of each of these logical channels includes an indicator. As will be described below, examples of the indicator in the configuration of the logical channel include a Boolean value, an integer value, and an explicit indication of a TB size such as a threshold value or limiting value of allowable TB sizes.

In some embodiments, the configuration of the logical channel includes, in addition to the UE-specific configuration per-logical channel, a TB size or a range of TB sizes selectable under the TB size restriction indicated by the indication, which is configured within system information. Accordingly the indicator in the logical channel configuration, e.g. Boolean or integer, points to or represents a selectable TB sizes TB size or a subset (e.g. a range) of TB sizes out of available TB sizes provided by the system.

By providing an indication within the configuration per logical channels, it is possible to establish priority levels for the uplink transmissions of the respective logical channels. Thus, embodiments which include such an indication (e.g. Boolean indicator or integer indicator) in the per-logical-channel configuration may be called "priority-level-based".

### Boolean or integer indication

In some embodiments, the indication of the TB size restriction includes a Boolean value indicating whether or not the TB size restriction is to be applied for the logical channel. Accordingly, each logical channel is configured whether to apply the TB size restriction or TB selection, e.g. via higher layer signaling (such as RRC signaling).

The Boolean value indicates represents one of two possible values: True or False. For instance, True indicates that the TB size restriction (or TB selection restriction) is applied for the configured logical channel, and False indicates that TB size selection restriction for this logical channel is not applied.

For instance, as discussed above, the network may configure such restriction based on a latency requirement or a data priority of the UE, the logical channel, or both. E.g., the network sets the Boolean indicator to False, if the LCH carries higher priority data (e.g. URLLC data). On the other hand, the network my set True if the LCH carries lower priority data (e.g. eMBB data).

The UE may receive a list of TB sizes that are selectable with restriction (i.e. when the restriction is applied) via system information. This list of TB sizes may include the above-mentioned TB size or range of TB sizes selectable indicated by the indication.

Providing an indication of whether or not the TB size restriction is applied my facilitate reducing collisions for larger TB sizes since they are only be used for transmissions of certain data such as high priority or low latency data.

An example of the above configuration of a TB size restriction is provided below in Tables 2 to 5.

**Table 2**

| **Configuration via higher level signalling** | |
|---|---|
| UEs | **Boolean value in LCH ID** |
| UE1 | LCH1 -> False |
| | LCH2 -> True |
| UE2 | LCH1 -> True |
| | LCH2 -> True |

**Table 3**

| **Configuration via System information** | |
|---|---|
| **TB_selection Restriction applied** | **TB Size (bits)** |
| **True** | **Up to X₁** |
| **False** | **Up to X₂** |
| Note: It is assumed that size of X1 = 100 bit and X2 = 1000 bit | |

Table 2 shows the configured Boolean value for each logical channel (in this example LCH1 and LCH2) respectively for a plurality of UEs. Table 3 announces the restriction details in the system information. Therein, the column "Boolean value in LCH ID" in Table 2 points to the column "TB_selection Restriction applied" in Table 3. Moreover, the exemplary assumed values (100 bit, 1000 bit) are to be understood in an illustrative rather than limiting sense. Accordingly, when the TB size restriction is applied for the logical channel, an uplink transmission of data of the logical channel can have up to X₁ bits TB size, and when it is not applied, TB sizes of up to X₂ bits are possible. Table 4 further provides a mapping between preamble and TB size.

**Table 4**

| **Mapping between preamble and TB size** | |
|---|---|
| Preamble (P) | **TB Size (bits)** |
| P1 | X₁ |
| P2 | X₂ |

An example of a possible data transmission resulting from the configuration of Tables 2 to 4 is shown in Table 5. Due to the configured TB size restriction, UE 2 selects transports block sizes of 100 bits for both channels although there is a greater amount of data to be sent.

**Table 5**

| **UE** | **Data to be sent (in bits)** | **Preamble selected by UE** | **TB size selected by UE (bits)** |
|---|---|---|---|
| UE₁ | LCH1 -> 1000 | P2 | X₂₌1000 |
| | LCH2 -> 100 | P1 | X₁₌100 |
| UE₂ | LCH1 -> 1000 | P1 | X₁₌100 |
| | LCH2 -> 1000 | P1 | X₁₌100 |

If configuration of the restriction TB sizes available under restriction is provided in system information, the network does not have to configure each UE individually again when it intends to change the restriction rule. It is sufficient to inform the changes through system information.

Next, an example of signaling is provided. A configuration of a logical channel may be included in RRC signaling as follows.

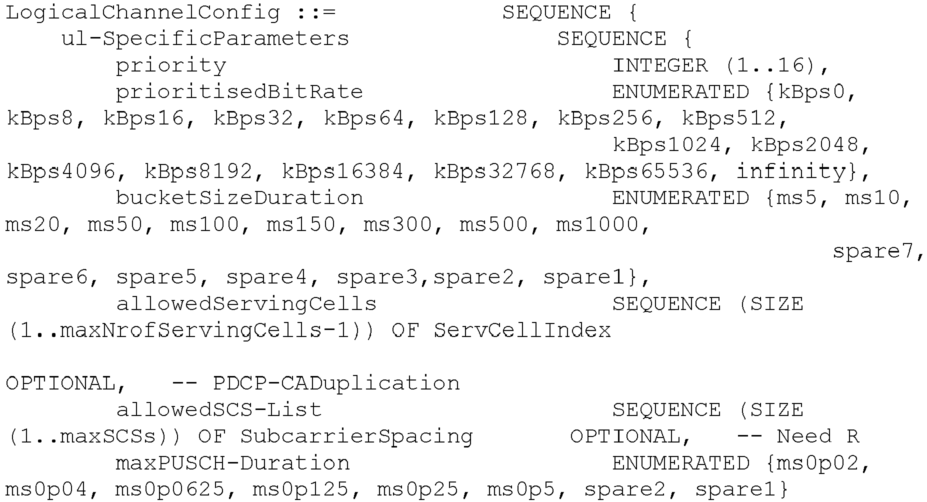

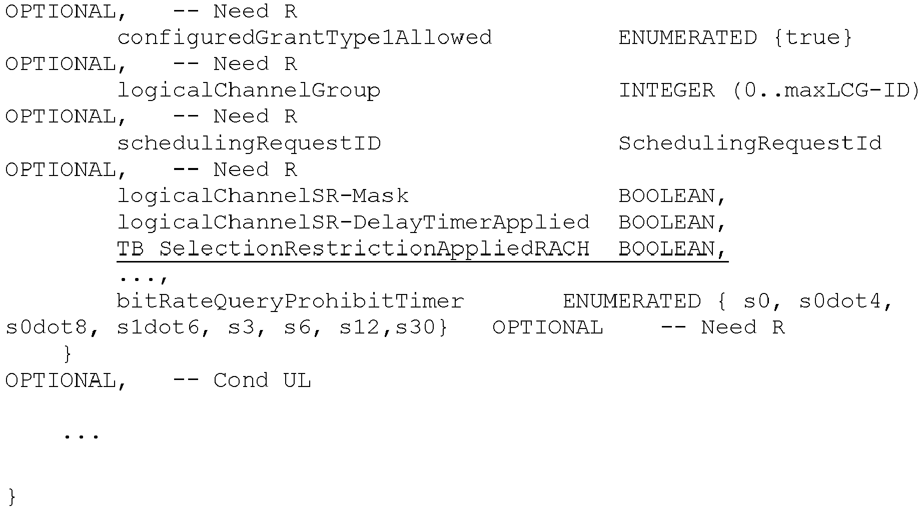

In the above signaling of the LCH configuration, the TB selection restriction is applied in the LCH. In particular, the Boolean value corresponds to "TB_SelectionRestrictionAppliedRACH".

Moreover, within the preamble selection restriction is applied in the system information message within RRC signaling, as shown below:

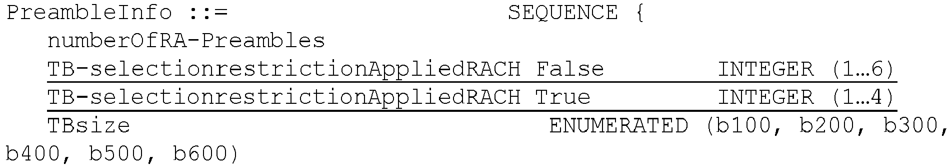

Here, Preamble 1 is associated with 100 bits TB size preamble2 is associated with 200 bits TB size, and so on. In this example, the range of TB sizes available under the TB size restriction includes TB sizes 100 bits - 400 bits), whereas, without the restriction, TB sizes from 100 bits to 600 bits are available.

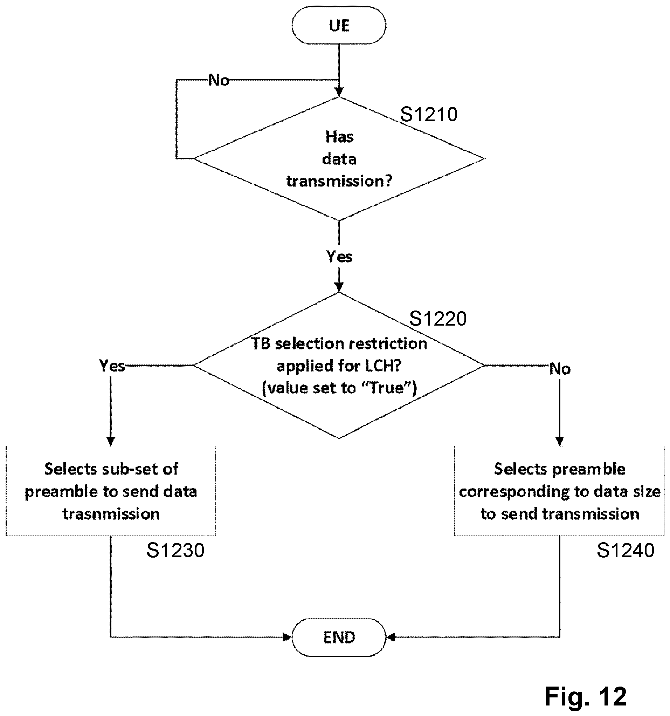

A flow chart of steps taken by a UE for determining which the data size in accordance with the TB size restriction by a Boolean value is shown in **Fig. 12****.** Initially, in step S1210, the UE checks whether there is data in the buffer which it has to send. If yes, the UE checks, S1220, whether a TB selection restriction is applied for the LCH to which the data to be sent belongs. If yes, the UE selects, step S1230, a preamble for performing the data transmission from a subset of preambles corresponding to the subset or range of TB sizes selectable under the TB size selection restriction. If no, the UE may select, step S1240, a preamble corresponding to the data size of the data in the buffer to be send, to send the transmission.

As mentioned, in some embodiments, the indication of the TB size includes an integer value out of a plurality of integer values, which represent a plurality of TB sizes ranges of TB sizes selectable under the TB size restriction indicated by the indicator in the configuration per logical channel.

Similar to the case of the Boolean value, and to the above description, the priority level is indicated for each logical channel from the network via higher layer signaling (e.g. RRC signaling).

Exemplary RRC signaling of a configuration of a logical channel in RRC signaling is shown below:

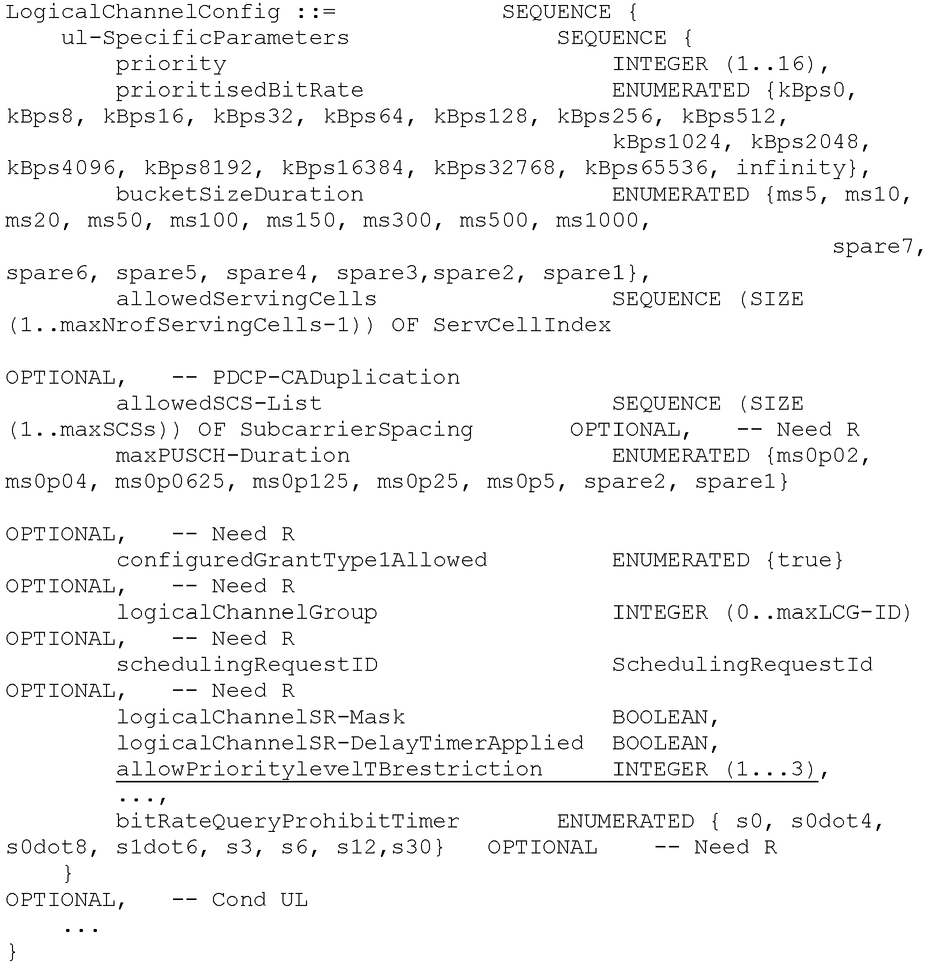

By providing different TB size restriction to different logical channels, the network determines different priority levels to the uplink transmissions of the different logical channels, which are represented by the integer values of the indication of the TB size restriction. This is indicated by the variable name "allowPrioritylevelTBrestriction" in the above exemplary signaling. In the above example, an integer value "1" corresponds to a higher priority level, and "3" corresponds to a lower priority level.

Here, the priority level of uplink transmissions corresponds to "allowPrioritylevelTBrestriction", which is different from the parameter "priority" also present in the logical chanel configuration which indicates a logical channel priority among logical channels within the UE rather than within the cell. This variable priority does not specifically relate to uplink transmissions in random access procedures, but is signaled to the UE for determining a priority of the logical channel in which may for instance be used for other types of transmissions than random access procedures, such as a configured grant. The parameter "priority" defines an order of priorities of logical channels within the UE. On the other hand, the indication of the TB size establishes, by assigning different TB size restriction to different logical channels for UEs within a cell, an absolute priority across UEs within a cell.

Accordingly, a UE may select a TB size based on the priority level as implied by the integer indication of allowable TB sizes. Thus, a UE may select a larger TB size, if a higher priority level is indicated in the configuration of the LCH. On the other hand, the UE has a restriction to select a TB size if a lower priority is indicated by the indicator "allowPrioritylevelTBrestriction" in the LCH configuration.

For example, a logical channel where the integer value indicates 1 is allowed to use a larger TB size and/or a larger range of TB sizes as compared to lower priority levels 2 and 3. Similar to the Boolean indication, the UE may receive an association of allowed TB sizes or TB size ranges (and corresponding preambles) with the integer values of the priority level corresponding to the allowed TB ranges in the system information message. An example of such system information is provided below:

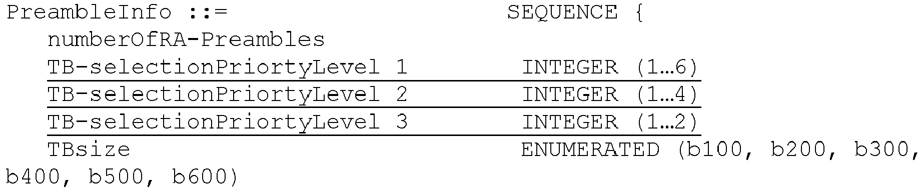

Preamble 1 is associated with 100 bits (b100), preamble 2 with 200 bits, and so on.

As a variation to signaling an indicator of the TB restriction representing a priority level for uplink transmissions in a random access procedure, the UE may determine the priority level implicitly based on the logical channel priority. For instance, a mapping between the priority level and the logical channel priority (e.g. as indicated by the variable "priority" in the examples of logical channel specific configurations provided above obtaining exemplary integer values 1 to 16) may be defined by the standard and thus be "hard-coded". Furthermore, available TB sizes or TB size ranges may be specified in the standard as well or signaled in system information similar to the above examples of RRC signaling. An example is illustrated in the following Table 6:

**Table 6**

| **Priority (logical channel)** | **Priority level** |
|---|---|
| 1-5 | 1 |
| 6-10 | 2 |
| 11-16 | 3 |

On the one hand, when having a hard-coded priority, the priority level need not be included in the signaling as an additional parameter and thus, signaling overhead may be reduced. However, the network needs to configure relative priority among UEs within a cell (since the indicator "priority" is generally used to establish an order of priorities within the UE rather than within the cell), which may increase the complexity.

### Indication of TB size limit

In some embodiments the indication of the TB size restriction in the configuration per logical channel includes a threshold of TB sizes selectable under the TB size restriction. For instance, the threshold is a limiting value such as a maximum value of TB sizes selectable under the TB size restriction.

Accordingly, a threshold such as a maximum TB size is configured to each logical channel (LCH) from the network via higher-level signaling (e.g. RRC). With this threshold, the network configures the TB size e.g. based on the UE's latency requirement and/or data priority. For instance, the network configures a larger allowable TB size if the LCH carries higher priority data, and configures a smaller TB size if the LCH carries lower priority data.

With such configuration, the UE is not allowed to select a TB size that is more than the configured TB size, as given by the maximum or threshold. For example, if data available in the buffer has a data volume of 1000 bits, but the configured TB size (orTB size maximum/limit) for the logical channel is 100 bit, the UE may select a TB size of 100 bit and no larger TB size. For instance, the TB size is indicated without reference to a TB size or TB size range within system information, e.g. in a "self-contained manner" or explicitly (e.g. as a value from among {b100, b200,...}) by an information element in the LCH configuration which is capable of taking values corresponding to different TB sizes and which may for instance be called "max_TBsizeForRACH", as shown in the following RRC signaling example.

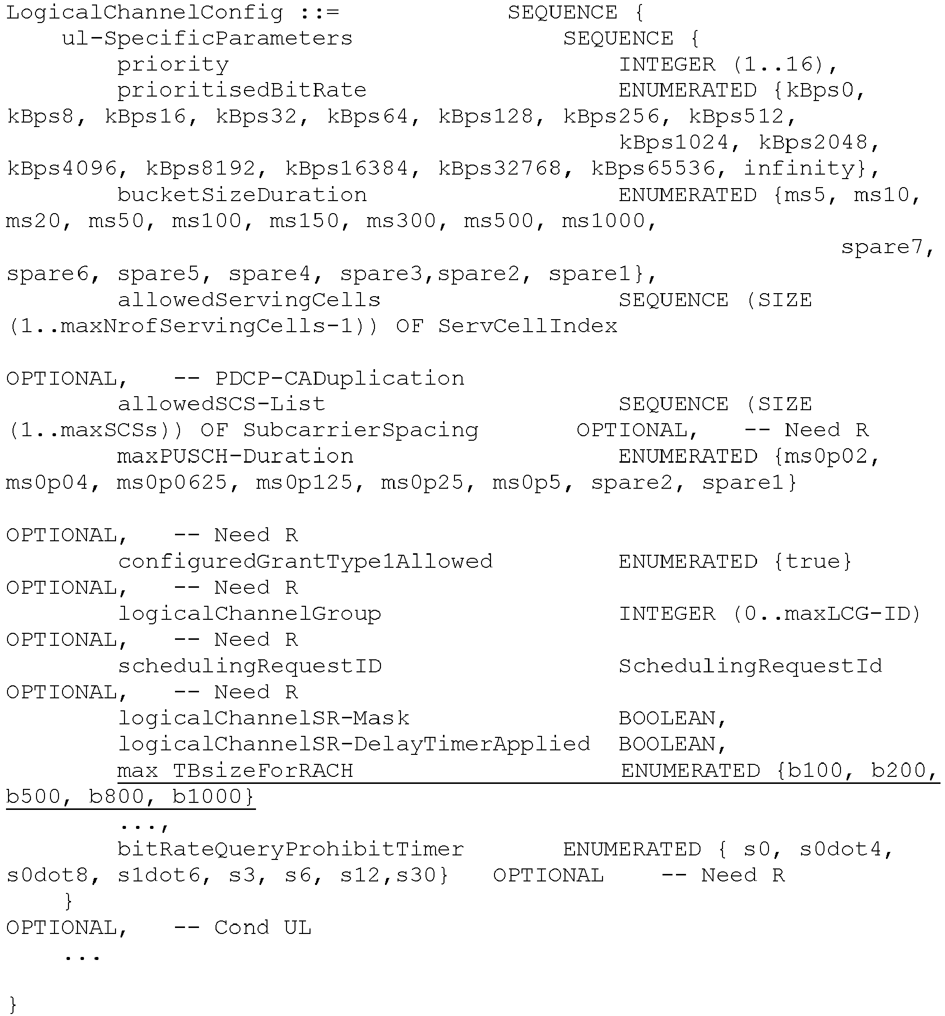

As mentioned above, the embodiments with a Boolean or integer indication may facilitate informing changes in the configuration and need not configure each UE individually. On the other hand, when the TB size restriction is explicitly in the LCH configuration as a threshold or limit, a parameter such as "TB-selectionRestrictionAppliedRACH" or "TB-selectionPriorityLevel", as shown above, is not required in the system information. This facilitates reducing signaling overhead with respect to the system information.

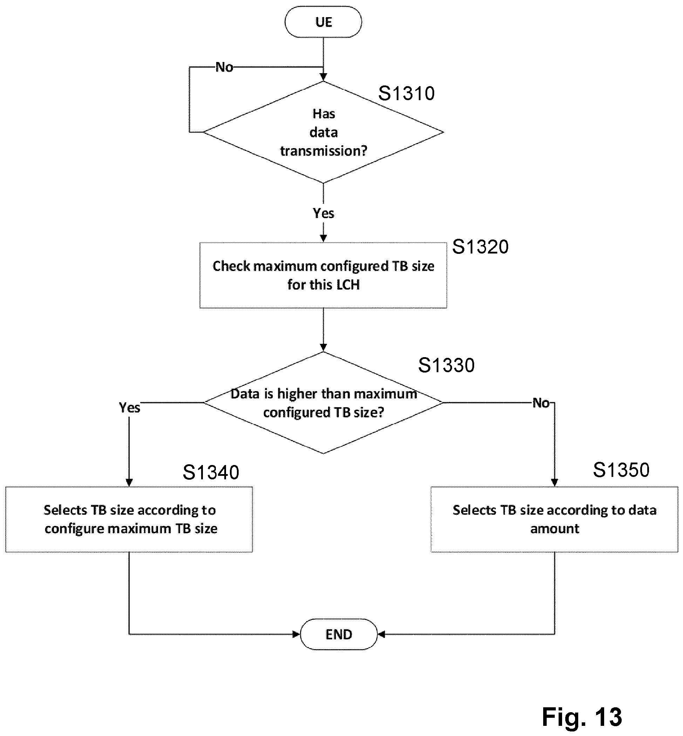

Exemplary steps performed by a communication apparatus 960 such as a UE are shown in **Fig. 13****.** In step S1310, the UE checks whether there is data in the buffer which it has to send. If yes, the UE checks S1320 the maximum configured TB size for the LCH of the data to be sent (e.g. the threshold value) and checks S1330 whether the data volume of the data to send is higher than the maximum configured TB size. If the data volume is higher, than UE selects the TB size in accordance with the configured maximum TB size, step S1340. If no, the UE selects the TB size according to the data volume or amount to be sent.

An example of TB size selection in accordance with a configured maximum TB size is shown in Tables 7 to 9.

**Table 7**

| **Configuration via dedicated signalling** | |
|---|---|
| UE | **Maximum TB size configuration in LCH ID** |
| UE1 | LCH1 -> 1000 |
| | LCH2 -> 500 |
| UE2 | LCH1 -> 500 |
| | LCH2 -> 500 |

**Table 8**

| **Mapping between preamble and TB size** | |
|---|---|
| Preamble (P) | **TB Size (bits)** |
| P1 | 500 |
| P2 | 1000 |

**Table 9**

| **UE** | **Data to be sent (in bits)** | **Preamble selected by UE** | **TB size selected by UE (bits)** |
|---|---|---|---|
| UE₁ | LCH1 -> 1000 | P2 | 1000 |
| | LCH2 -> 500 | P1 | 500 |
| UE₂ | LCH1 -> 1000 | P1 | 500 |
| | LCH2 -> 1000 | P1 | 500 |

Table 7 shows configured maximum in logical channels LCH1 and LCH2, both of which are each configured respectively for UEs UE1 and UE2. Table 8 provides a mapping between preambles and TB sizes. Table 9 shows a resulting selection of TB sizes and corresponding preambles. UE1 is allowed to select larger TB size (1000 bit) to send 1000 bit data for LCH1, while UE2 can only send select smallerTB size (i.e. 500bit) despite having 1000 bits to transmit for LCH1 and LCH2.

### Random access type based TB size restriction

In some embodiments, the TB size restriction includes a TB size restriction per random access procedure type (or RACH type) out of a first random access procedure type and a second random access procedure type, wherein the first random access procedure type has a lower number of transmission steps than the second random access procedure type. For instance, the UE circuitry 980, in operation selects a random access procedure type based on the configuration of the TB size restriction, and the UE transceiver 979 uses the selected random access procedure type for the transmission of the data. E.g., the TB size restriction per random access procedure type allows a greater TB size to be transmitted on the first random access procedure type than on the second random access procedure type. The UE circuitry 980 may then select the random access procedure type based on the size of the data of the logical channel. Accordingly, the first and the second RACH types may be used for respectively different TB sizes, wherein transmission using the first RACH type may be restricted to larger TB sizes.

For instance, the first random access procedure type corresponds to the 2-step RACH of Fig. 8, and the second random access procedure type corresponds to the four-step RACH shown in Fig. 7. The UE may select the RACH / random access procedure type based on the TB size, whereby the network configures larger TB sizes only for the 2-step RACH and smaller TB sized only for the 4-step RACH.

The selection of the RACH type based on the TB size may facilitate for the UE to avoid segmentation when the UE performs 2-step RACH. Accordingly, 2-step RACH may in particular facilitate transmitting user data of high-priority data transmissions (e.g. urgent loT (URLLC) packets. If a TB size is not sufficient for an loT packet, segmentation will occur for the loT packet, which incurs delaying the completed transmission of the packet to the next uplink transmission opportunity. Hence, limiting the 2-step RACH to larger TB sizes may facilitate avoiding segmentation and thus fulfilling latency requirements.

An example of data transmission in accordance with configuration of allowed data sizes for the different RACH types is provided in Tables 10 and 11 as well as Table 12further below.

**Table 10**

| **Mapping between preamble and TB size** | |
|---|---|
| Preamble (P) | TB Size(bits) |
| P1 | X₁ |
| P2 | X₂ |
| P3 | X₃ |
| P4 | X₄ |
| Note: It is assumed that X1<X2<X3<X4 | |

**Table 11**

| **Configuration via System information** | |
|---|---|
| TB_max | Allowed TB Size (bits) |
| 4-Step RACH | X₁ , X₂ |
| 2-step RACH | X₃, X₄ |
| Note: It is assumed that size of X₁ = 100 bit, X₂ = 200 bit, | |
| X₃ = 500 bit, and X₄ = 1000 bit | |

Table 10 provides a mapping between preamble and TB size, and Table 11 provides a TB configuration for 2-step RACH and 4-step RACH. In accordance with the configuration, the 2-step RACH is restricted to the larger TB sizes X3 and X4, whereas the UE must choose the 4-step RACH for smaller TB sizes (like in all previous tables and examples, the numerical values of bit sizes are examples which are not intended to limit the disclosure). It can be seen from Table 10 combined with Table 11 that each one of preambles P1 to P4 has a one-to-one correspondence respectively with a combination of TB size and RACH type.

A configuration as exemplified by Table 11 may be signaled within system information in RRC signaling. An example of such system information is given in the following:

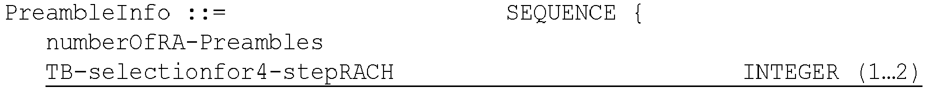

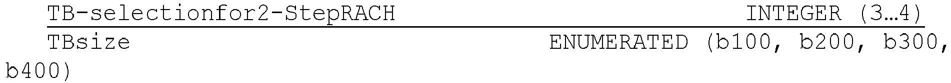

Table 12 illustrates a selection of RACH types in accordance with the mapping of TB sizes and preambles of Fig. 10 and the configuration of Table 11: The UE sends larger data volume having larger sizes (500 bits, 1000 bits) in the 2-step RACH, while data volumes having smaller sizes are sent in the 4-step RACH.

**Table 12**

| **UE** | **Data to be sent (in bits)** | **Preamble selected by UE** | **TB size selected by UE** | **RACH type selection** |
|---|---|---|---|---|
| UE₁ | LCH1 ->1000 | P4 | X₄₌1000 | 2-step RACH |
| | LCH2 -> 100 | P1 | X₁₌100 | 4-Step RACH |
| UE₂ | LCH1 -> 200 | P2 | X₂₌200 | 4-Step RACH |
| | LCH2 -> 500 | P3 | X₃₌500 | 2-step RACH |

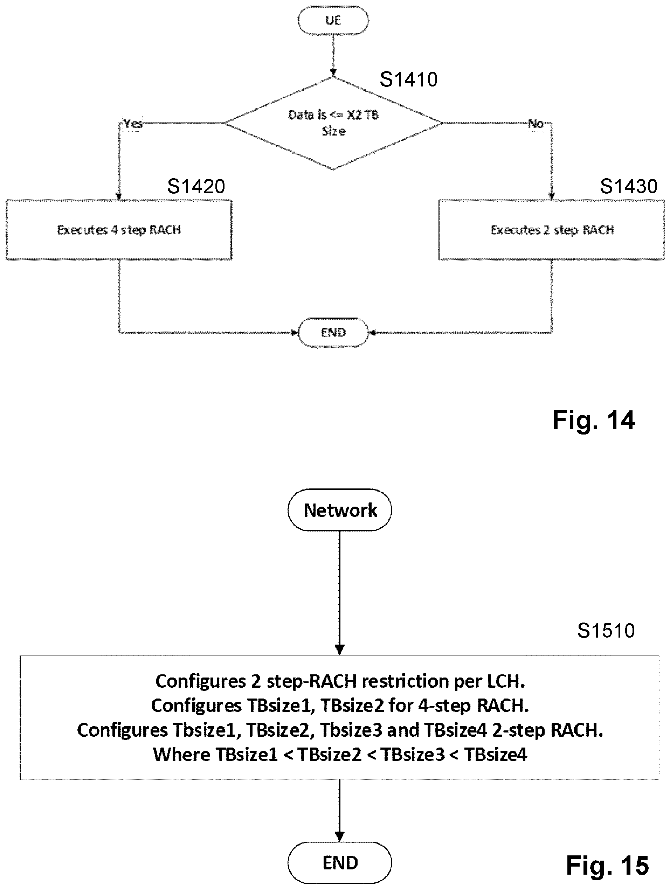

Steps performed by a UE in the selection of the RACH type based on the data size are shown in **Fig. 14****.** In step S1410, the UE checks whether the size of the data to be sent is smaller than or equal to X₂ from Table 10. If yes, the UE executes the 4-step RACH step S1420, and if no, the UE executes S1430 the 2-step RACH.

### Combinations

As described in section "Random access type based TB size restriction", the UE is configured to select the RACH type based on the size of the data available in the buffer for sending. As an alternative or in addition, a logical channel (or a plurality of logical channels configured for a UE) may be configured to use either the first random access procedure (e.g. 2-step RACH) or the second random access procedure type (4-step RACH).

As an example, a higher priority channel (e.g. an URLLC channel) may be allowed to use either the 2-step RACH or the 4-step RACH (e.g. depending on the size of the data to send, as described above under "Random access type based TB size restriction"), while lower priority data (e.g. data of an eMBB logical channel) may be allowed to use only the 4-step RACH.

In some embodiments, the configuration of the TB size includes, within a UE-specific per-logical-channel configuration, a Boolean value indicating whether or not the first random access procedure type is restricted.

An example of a logical channel configuration in RRC signaling including a Boolean value indicating whether or not the first random access procedure type is restricted is shown in the following, where the Boolean value corresponds to "2stepRACHrestriction":

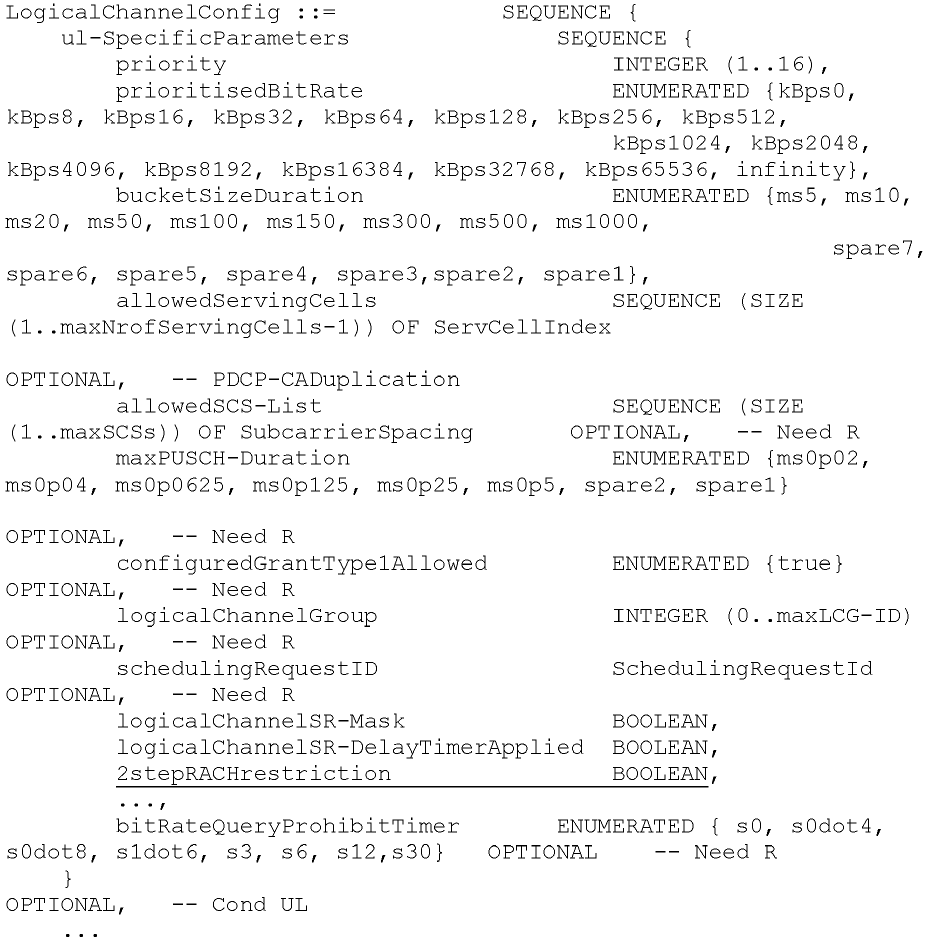

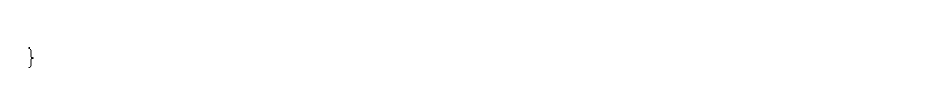

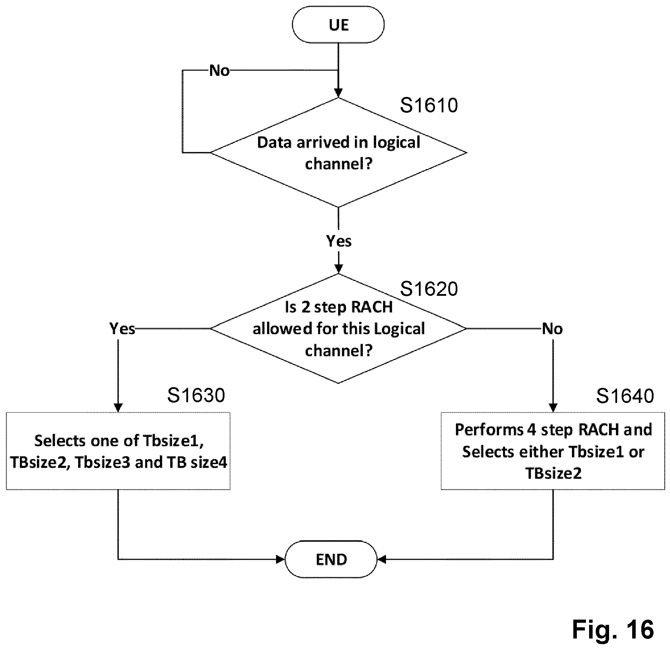

With such a per-logical channel restriction per logical channel as well as a restriction of larger TB sizes to the 2-step RACH, it follows that larger TB sizes, being selectable for 2-step RACH only, are restricted per logical channel. Accordingly, a combination of a restriction of the TB size per logical channel, as described under "Boolean or integer indication", and a TB size restriction per RACH type, as described under "Random access type based TB size restriction", is provided. For this combination of TB size restrictions, steps performed by the network (or network node 910) and the UE (or communication apparatus 960) are shown in Figures 15 and 16.

In step S1510, the network (e.g. network node circuitry 930) configures a 2-step RACH restriction (e.g. a Boolean value corresponding to "2stepRACHrestriction" from the above RRC signaling example). The network further configures TB sizes TBsize1 and TBsize2 for the 4-step RACH, and configures TB sizes TBsize1 to TBsize4 to the 2-step RACH, wherein TBsize1 < TBsize2 < TBsize3 < TBsize4. For instance, TBsize1 to TBsize4 correspond to TBsizes X₁ to X₄ shown in Table 10. System information may be provided e.g. as in the system information signaling example in section Random access type based TB size restriction" or as in the following signaling example:

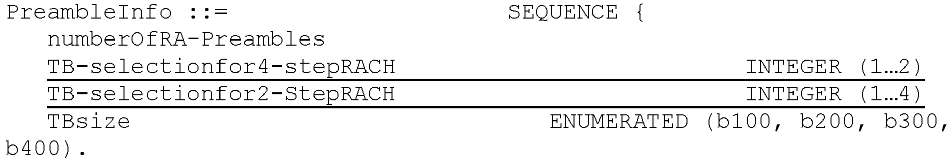

Having received the configuration as described in connection with step 1510 of Fig. 15, the UE checks if data of a logical channel has arrived in the buffer for transmission, step S1610. When data has arrived, the UE checks if the 2-step RACH restriction is applied or not for the logical channel of which the data has arrived, step S1620. If 2-step RACH restriction is not applied (Boolean value False, 2-step RACH is allowed, case "Yes" in Fig. 16), then the UE selects one TB size out of TB sizes TBsize1 to TBsize4, depending on the data volume in the data of the data of the logical channel that has arrived, S1230. If 2-step RACH restriction is applied for the logical channel (e.g. 2-step RACH not allowed for this logical channel, case "No" in Fig. 16, and the Boolean value indicating the restriction indicating "True"), the UE performs the 4-step RACH and selects either TBsize1 or TBsize2, step S1640.

Regarding the selected RACH procedure, different alternatives are possible when 2-step RACH is allowed for the logical channel. On the one hand, the UE may choose the 2-step RACH for the larger TB sizes, e.g. TBsize3 and TBsize4 and the 4-step RACH for the smaller TB sizes, TB sizes 1 and TB size 2. Accordingly, larger data volumes are prioritized to avoid segmentation, as described above. On the other hand, the logical channel may be prioritized irrespective of the data size. In this case, the UE may use the 2-step random access procedure for each available TB size.

Moreover, when TB size restrictions described in sections described in sections "Boolean or integer indication" and "Random access type based TB size restriction" are combined, the UE may check, by checking a Boolean value, before executing a two-step random access procedure, whether a TB size selection for the transmission of the data of the logical channel for 2-step RACH is applied for the logical channel. If the Boolean value indicates True, a restriction is applied, and the UE executes a four-step RACH to send data of the logical channel (e.g. using smaller TB sizes which are permitted with the restriction). A value False of the Boolean value indicates that a TB size selection restriction is not applied. Accordingly, the UE may perform the two-step RACH to send the data of this logical channel, or the UE may perform either one of the two-step RACH and the four-step RACH, depending on which random access type is configured for the data size of the logical channel data to be transmitted. For instance, the information element indicating the Boolean value is called "TB_SelectionRestrictionApplied2stepRACH", as in the following signaling example of a configuration for a logical channel:

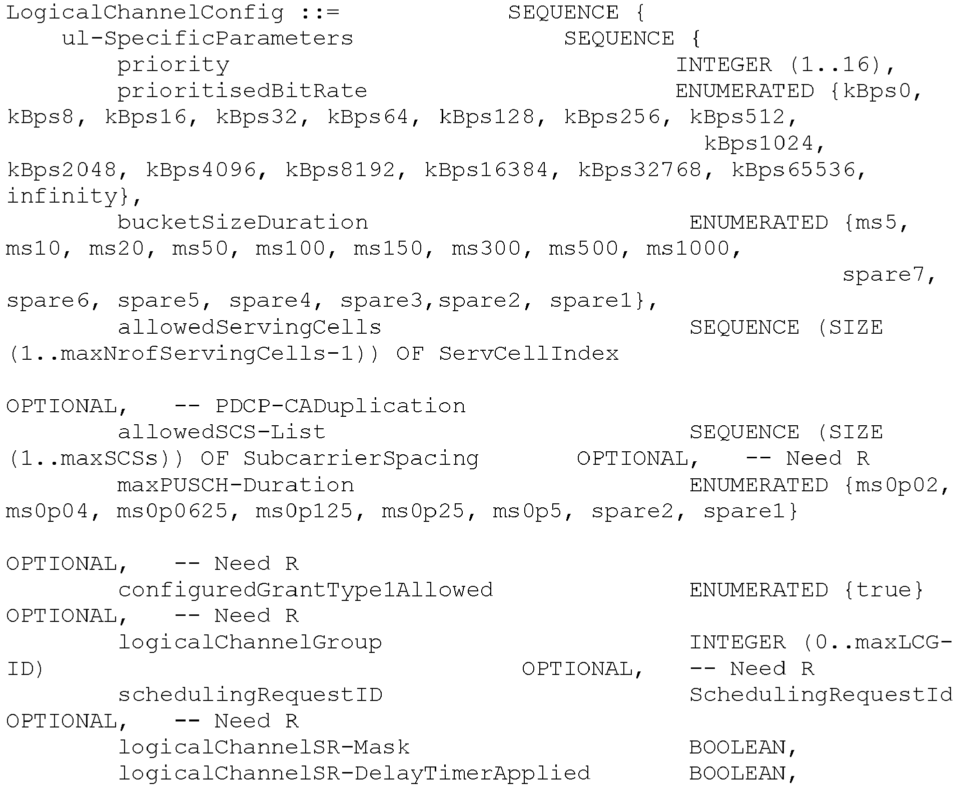

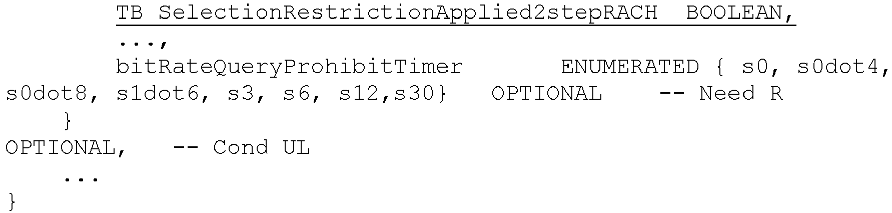

Furthermore, the TB size restriction configurations from sections "Indication of TB size limit" and "Random access type based restriction" may be combined. For instance, before executing the 2-step RACH, the UE checks whether the amount of data to be transmitted is equal to or higher than a configured TB size. If the data size is equal to or higher than the configured TB size, the UE performs 2-step RACH, and otherwise performs a 4-step RACH procedure.

For example, if the UE has 500 bit of data to transmit and the configured TB size is 400bit, then the UE is allowed to send the data via 2 step RACH. However, if the UE has 200 bit of data and the configured TB size is still 400 bit than UE send data via 4 step RACH. Here, the configured TB size, which may be provided in the configuration, is a minimum TB size for using the 2-step RACH procedure. Accordingly, in the present disclosure, the above-described threshold value or limit for a TB size may correspond to a maximum TB size (such as a maximum TB size allowed under a TB size restriction) or a minimum TB size (e.g. a minimum TB size for which the two-step RACH is not restricted). A signaling example for a LCH configuration is provided in the following, wherein the information element specifying the minimum TB size for the two-step RACH type is called "minimum TBsizeFor2stepRACH".

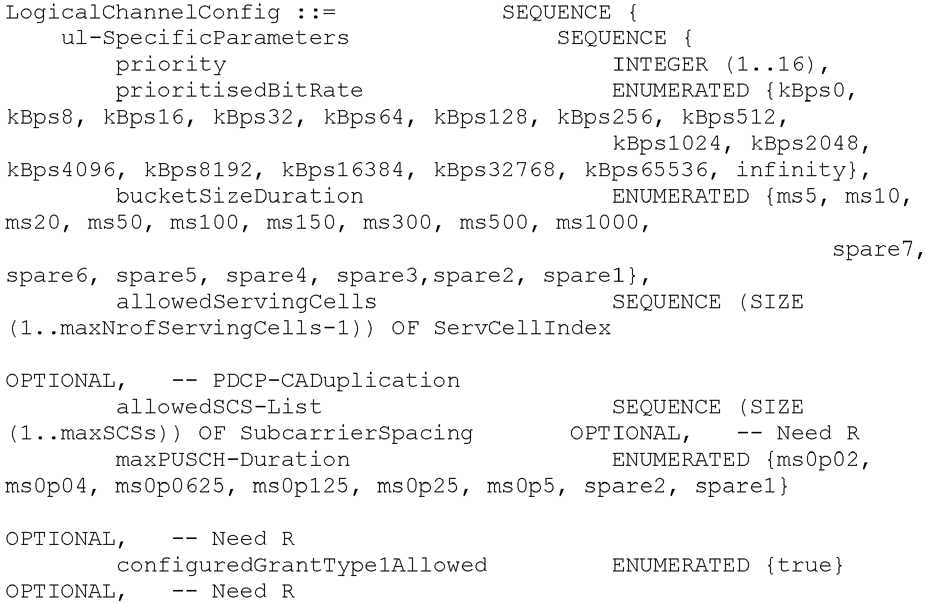

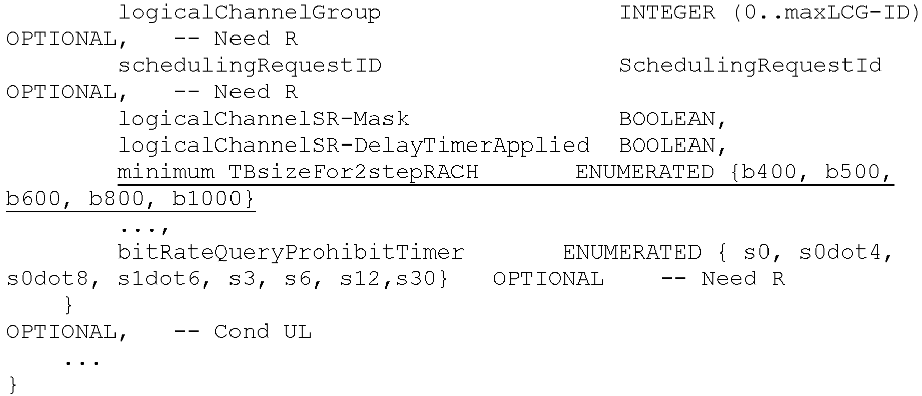

Furthermore, the provision of a Boolean indication of a TB size restriction, as described under "Boolean or Integer indication", and of a configured TB size such as a threshold described in "Indication of TB size limit" may be combined. Accordingly, the configuration may include, within a UE-specific per-logical channel configuration, an indication of the TB size restriction including a Boolean value indicating whether or not the TB size restriction is to be applied for the logical channel, and also including a threshold of TB sizes selectable under the TB size restriction.

Accordingly, before selecting a TB size for the transmission of the data of the logical channel, the UE may first check, by checking the Boolean indication, whether the TB selection restriction is applied for this logical channel.

On the one hand, if the TB restriction is applied for this logical channel (Boolean value set to "True"), the UE further checks the configured TB size (e.g. threshold or limit or maximum value), and is not allowed to select a TB size, which is more than the configured TB size.

On the other hand, if the TB size restriction is not applied for this logical channel (the Boolean value being set to "False"), the UE does not need to check the configured TB size. If both the Boolean indication of whether the restriction is applied and indication specifying the maximum TB size are included in the configuration of the logical channel, the TB sizes permitted under the restriction need not be signaled within system information. An example is given in the following signaling of a per-logical-channel configuration with the indications "TB_SelectionRestrictionAppliedRACH" and "max_TBsizeForRACH":

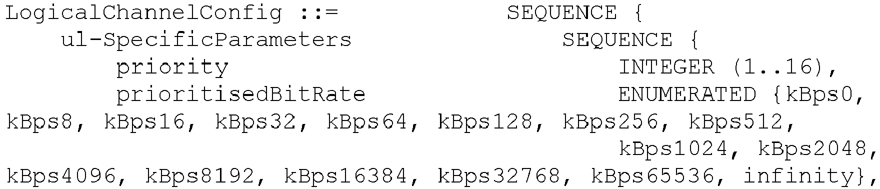

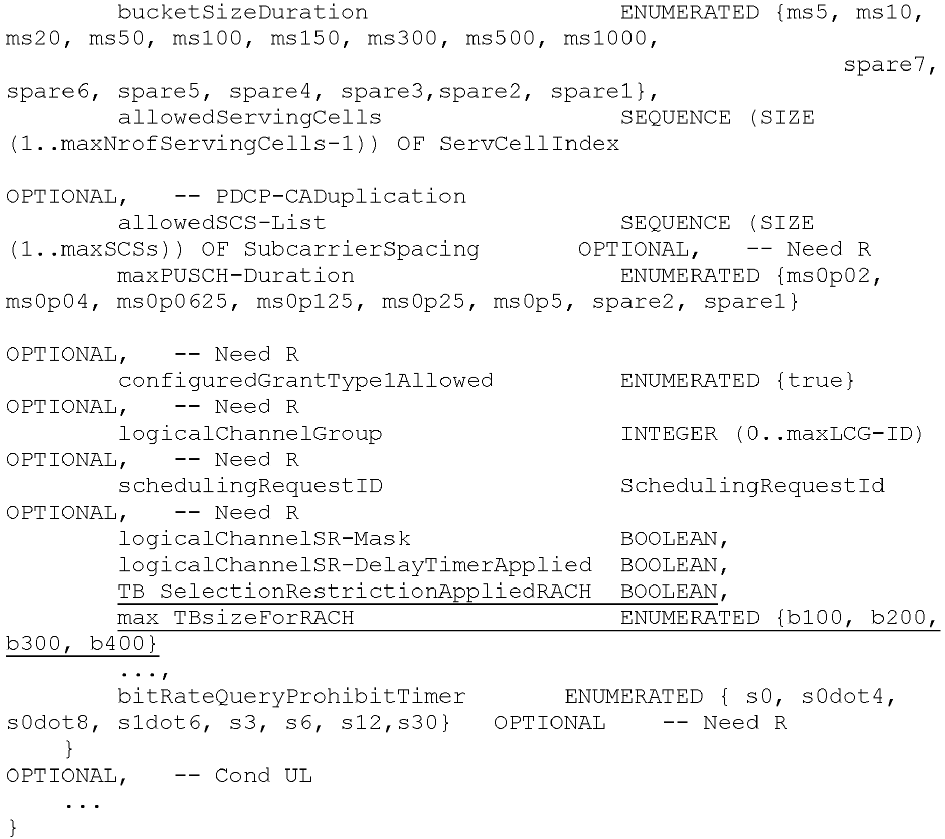

Moreover, TB size restrictions from each of above sections "Boolean or integer indication", "Indication of TB size limit", and "Random access type based TB restriction" may be combined.

For instance, the network configures individual TB size restriction respectively for the two-step RACH type and for the four-step RACH type along with the maximum allowable TB size for sending data. This is shown in the following signaling example including the respective Boolean indications "TB_SelectionRestrictionApplied2stepRACH" and "TB_SelectionRestrictionApplied4stepRACH" as well as corresponding respective information elements "max_TBsizeFor2stepRACH" and "max_TBsizeFor4stepRACH" in the configuration per logical channel.

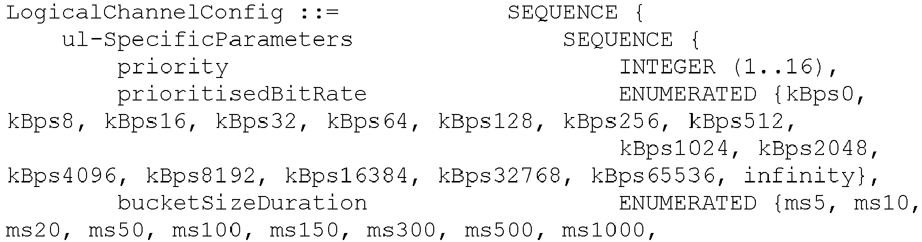

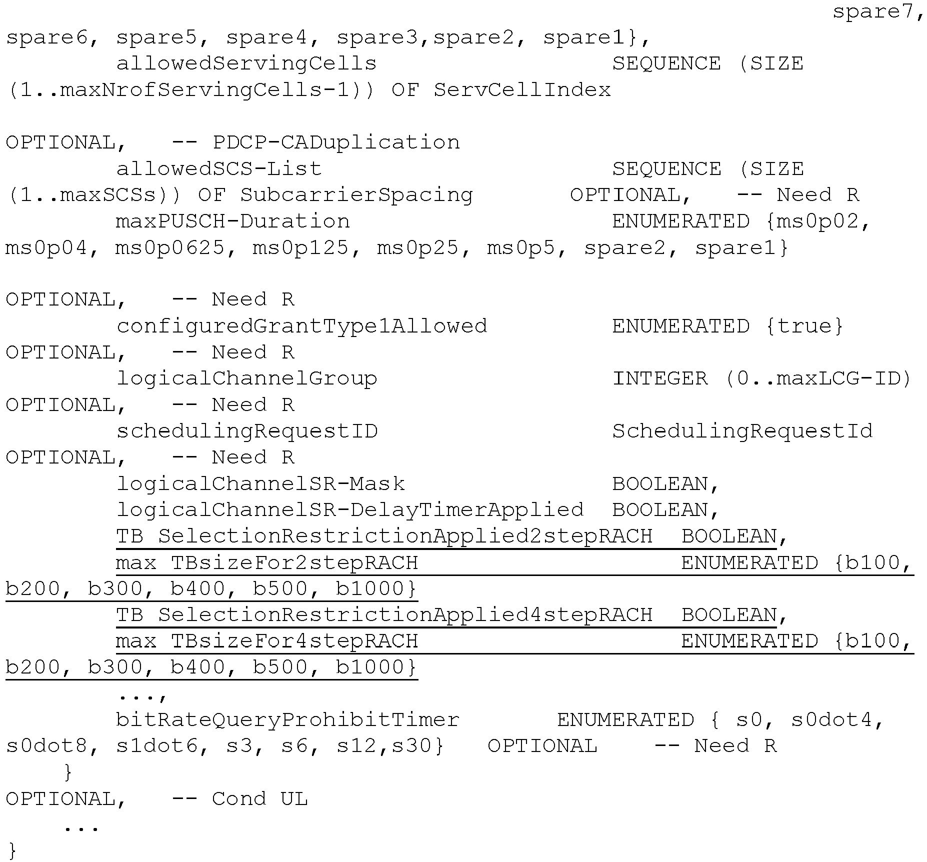

As another option, the network configures the TB size restriction, as in the following example of RRC signaling, by including Boolean values indicating whether the TB size restriction is applied respectively per RACH type in the per-logical-channel configuration, as shown below.

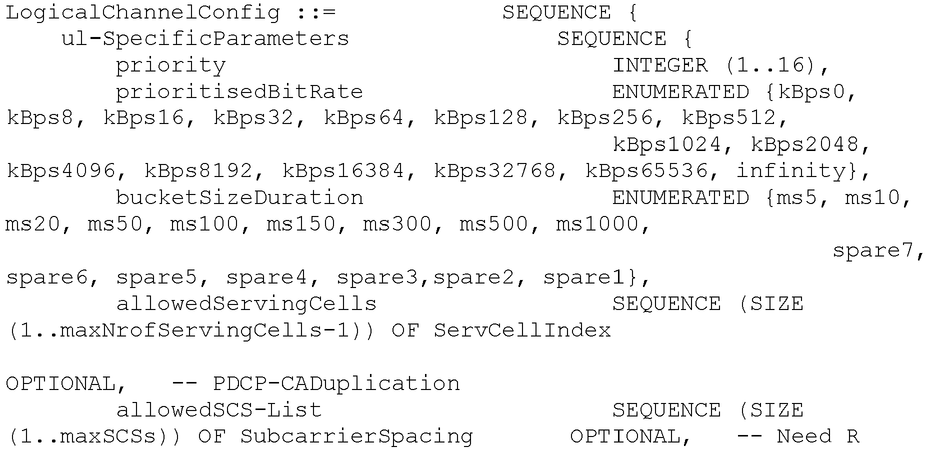

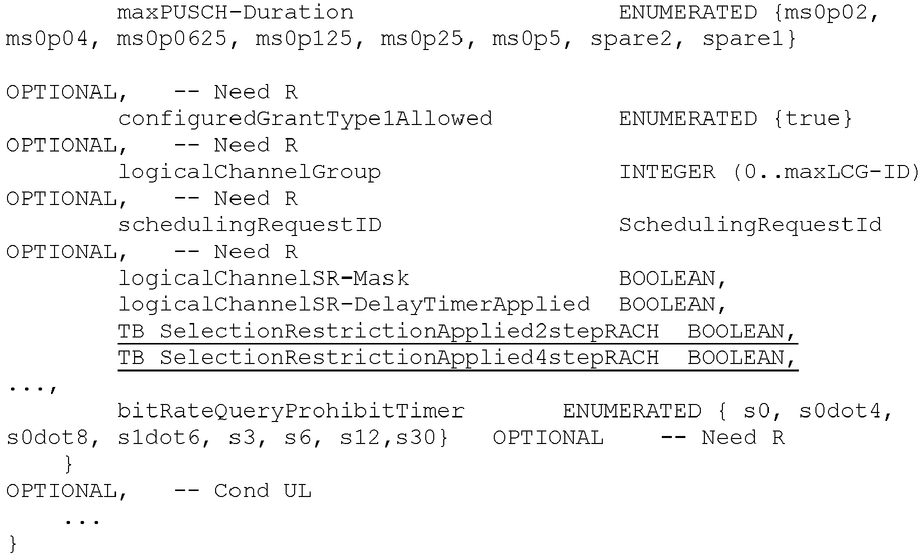

Allowable TB sizes or ranges of TB sizes selectable under TB size restriction indicated by the above per-logical channel configuration may be provided respectively per RACH type in the system information, as shown in the following example.

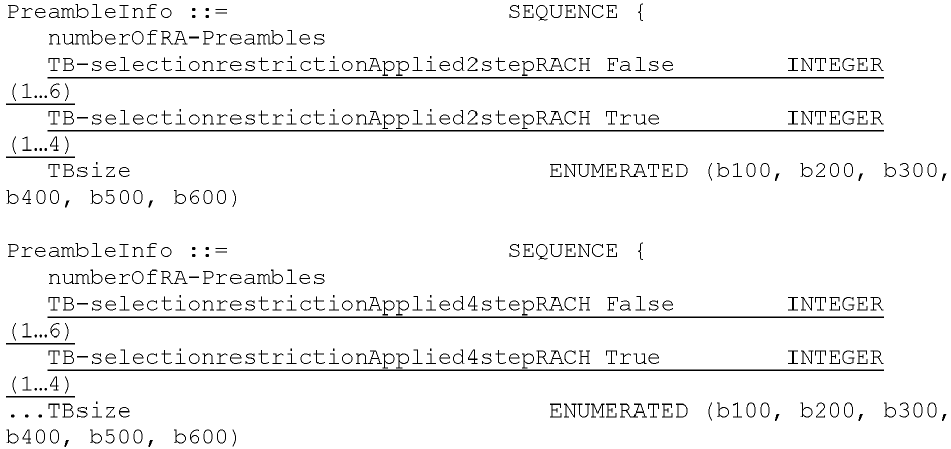

As described above, different examples of configurations of TB size restriction have been shown. However, this disclosure is not restricted to these examples. Other combinations are not precluded.

The present disclosure can be realized by software, hardware, or software in cooperation with hardware. Each functional block used in the description of each embodiment described above can be partly or entirely realized by an LSI (large scale integration) such as an integrated circuit (IC), and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Provided is a communication apparatus, comprising a transceiver, which, in operation, receives a configuration of a transport block, TB, size for data of a logical channel to be transmitted during a random access procedure, the configuration of the TB size including at least one of a TB size restriction per logical channel, and a TB size restriction per random access procedure type out of a first random access procedure type and a second random access procedure type, the first random access procedure type having a lower number of transmission steps than the second random access procedure type; and circuitry, which, in operation, performs, based on the received configuration of the TB size, a selection of at least one of the TB size and the random access procedure type for transmission of the data of the logical channel, wherein the transceiver, in operation, performs the transmission of the data of the logical channel in accordance with the selection.

For example, the circuitry, in operation, selects a preamble based on the TB size restriction for the logical channel, the preamble having a one-to-one correspondence with the TB size and the random access procedure type.

In some embodiments, the configuration of the TB size includes, within a UE-specific per-logical-channel configuration, an indication indicating the TB size restriction.

For instance, the configuration of the TB size includes, within system information, a TB size or a range of TB sizes selectable under the TB size restriction indicated by the indication.

In some examples, the indication of the TB size restriction includes a Boolean value indicating whether or not the TB size restriction is to be applied for the logical channel.

In some examples, wherein the indication of the TB size restriction includes an integer value out of a plurality of integer values representing a plurality ranges of TB sizes selectable under the TB size restriction indicated by the indicator.

In some embodiments, the indication of the TB size restriction includes a threshold of TB sizes selectable under the TB size restriction.

In some embodiments, the TB size restriction per random access procedure type allows a greater TB size to be transmitted on the first random access procedure type than on the second random access procedure type, and the circuitry, in operation, selects the random access procedure type based on the size of the data of the logical channel.

For instance, the configuration of the TB size includes, within a UE-specific per-logical-channel configuration, a Boolean value indicating whether or not the first random access procedure type is restricted.

For example, first random access procedure type is a two-step random access procedure and the second random access procedure type is a four-step random access procedure.

For instance, the configuration of the TB size is received in RRC, Radio Resource Control, signaling.

For example, the transceiver, in operation, performs the transmission of the logical channel while the UE is in RRC_INACTlVE state.

Further provided is a network node comprising circuitry which, in operation, determines a configuration of a transport block, TB, size for data of a logical channel to be transmitted by a communication apparatus during a random access procedure the configuration of the TB size including at least one of a TB size restriction per logical channel, and a TB size restriction per random access procedure type out of a first random access procedure type and a second random access procedure type, the first random access procedure type having a lower number of transmission steps than the second random access procedure type; and a transceiver which, in operation, transmits the configuration of the TB size for the data of the logical channel and receives the data of the logical channel, the TB size of the data of the logical channel complying with the transmitted configuration.

For instance, the circuitry, in operation, configures a preamble having a one-to-one correspondence with the TB size and the random access procedure type, and the transceiver, in operation, receives the preamble based on the TB size restriction for the logical channel.

In some embodiments, the configuration of the TB size includes, within a UE-specific per-logical-channel configuration, an indication indicating the TB size restriction.

For instance, the configuration of the TB size includes, within system information, a TB size or a range of TB sizes selectable under the TB size restriction indicated by the indication.

In some embodiments, the indication of the TB size restriction includes an integer value out of a plurality of integer values representing a plurality ranges of TB sizes selectable under the TB size restriction indicated by the indicator.

For example, the indication of the TB size restriction includes a threshold of TB sizes selectable under the TB size restriction.

In some embodiments, the TB size restriction per random access procedure type allows a greater TB size to be transmitted on the first random access procedure type than on the second random access procedure type.

For instance, the configuration of the TB size includes, within a UE-specific per-logical-channel configuration, a Boolean value indicating whether or not the first random access procedure type is restricted.

For example, the first random access procedure type is a two-step random access procedure and the second random access procedure type is a four-step random access procedure.

For example, the configuration of the TB size is transmitted in RRC, Radio Resource Control, signaling.

For instance, the transceiver, in operation, receives the transmission from a UE in RRC_INACTIVE state.

Further provided is a communication method to be performed by a communication apparatus, comprising the steps of receiving a configuration of a transport block, TB, size for data of a logical channel to be transmitted during a random access procedure , the configuration of the TB size including at least one of a TB size restriction per logical channel, and a TB size restriction per random access procedure type out of a first random access procedure type and a second random access procedure type, the first random access procedure type having a lower number of transmission steps than the second random access procedure type, and a transceiver which, in operation, transmits the configuration of the TB size for the data of the logical channel and receives the data of the logical channel, the TB size of the data of the logical channel complying with the transmitted configuration.

In some embodiments, the method includes selecting a preamble based on the TB size restriction for the logical channel, the preamble having a one-to-one correspondence with the TB size and the random access procedure type.

In some embodiments, the configuration of the TB size includes, within a UE-specific per-logical-channel configuration, an indication indicating the TB size restriction.

For instance, the configuration of the TB size includes, within system information, a TB size or a range of TB sizes selectable under the TB size restriction indicated by the indication.

For instance, the indication of the TB size restriction includes a Boolean value indicating whether or not the TB size restriction is to be applied for the logical channel.

In some embodiments, the indication of the TB size restriction includes an integer value out of a plurality of integer values representing a plurality ranges of TB sizes selectable under the TB size restriction indicated by the indicator.

For instance, the indication of the TB size restriction includes a threshold of TB sizes selectable under the TB size restriction.

In some embodiments, the TB size restriction per random access procedure type allows a greater TB size to be transmitted on the first random access procedure type than on the second random access procedure type, and the method includes selecting the random access procedure type based on the size of the data of the logical channel.

For example, the configuration of the TB size includes, within a UE-specific per-logical-channel configuration, a Boolean value indicating whether or not the first random access procedure type is restricted.

For instance, the first random access procedure type being a two-step random access procedure and the second random access procedure type being a four-step random access procedure.

For instance, the configuration of the TB size is received in RRC, Radio Resource Control, signaling.

For example, transmission of the logical channel is performed while the UE is in RRC_INACTlVE state.

Further provided is a communication method to be performed by a network node, comprising the steps of determining a configuration of a transport block, TB, size for data of a logical channel to be transmitted by a communication apparatus during a random access procedure , the configuration of the TB size including at least one of a TB size restriction per logical channel, and a TB size restriction per random access procedure type out of a first random access procedure type and a second random access procedure type, the first random access procedure type having a lower number of transmission steps than the second random access procedure type, transmitting the configuration of the TB size for the data of the logical channel, and receiving the data of the logical channel, the TB size of the data of the logical channel complying with the transmitted configuration.

For instance, the method includes a preamble having a one-to-one correspondence with the TB size and the random access procedure type, and the transceiver, in operation, receives the preamble based on the TB size restriction for the logical channel.

In some embodiments, the configuration of the TB size includes, within a UE-specific per-logical-channel configuration, an indication indicating the TB size restriction.

For instance, the configuration of the TB size includes, within system information, a TB size or a range of TB sizes selectable under the TB size restriction indicated by the indication.

In some embodiments, the indication of the TB size restriction includes an integer value out of a plurality of integer values representing a plurality ranges of TB sizes selectable under the TB size restriction indicated by the indicator.

For example, the indication of the TB size restriction includes a threshold of TB sizes selectable under the TB size restriction.

In some embodiments, the TB size restriction per random access procedure type allows a greater TB size to be transmitted on the first random access procedure type than on the second random access procedure type.

For instance, the configuration of the TB size includes, within a UE-specific per-logical-channel configuration, a Boolean value indicating whether or not the first random access procedure type is restricted.

For example, the first random access procedure type is a two-step random access procedure and the second random access procedure type is a four-step random access procedure.

For example, the configuration of the TB size is transmitted in RRC, Radio Resource Control, signaling.

For example, the transmission of the logical channel is received the transmission from a UE in RRC_INACTlVE state.

Summarizing, provided are a communication apparatus, a network node, and corresponding methods. The communication apparatus comprises a transceiver, which, in operation, receives a configuration of a transport block (TB) size for data of a logical channel to be transmitted during a random access procedure including at least one of a TB size restriction per logical channel, and a TB size restriction per random access procedure type out of a first random access procedure type and a second random access procedure type, the first random access procedure type having a lower number of transmission steps; and circuitry, which, in operation, performs, based on the received configuration of the TB size, a selection the TB size and/or the random access procedure type for transmission of the data of the logical channel, wherein the transceiver, in operation, performs the transmission of the data of the logical channel in accordance with the selection.

## Claims

1. A communication apparatus, comprising:
a transceiver, which, in operation, receives a configuration of a transport block, TB, size for data of a logical channel to be transmitted during a random access procedure, the configuration of the TB size including at least one of:
a TB size restriction per logical channel, and
a TB size restriction per random access procedure type out of a first random access procedure type and a second random access procedure type, the first random access procedure type having a lower number of transmission steps than the second random access procedure type; and
circuitry, which, in operation, performs, based on the received configuration of the TB size, a selection of at least one of the TB size and the random access procedure type for transmission of the data of the logical channel, wherein
the transceiver, in operation, performs the transmission of the data of the logical channel in accordance with the selection.

2. The communication apparatus according to claim 1, wherein the circuitry, in operation, selects a preamble based on the TB size restriction for the logical channel, the preamble having a one-to-one correspondence with the TB size and the random access procedure type.

3. The communication apparatus according to claim 1 or 2, wherein the configuration of the TB size includes, within a UE-specific per-logical-channel configuration, an indication indicating the TB size restriction.

4. The communication apparatus according to claim 3, wherein the configuration of the TB size includes, within system information, a TB size or a range of TB sizes selectable under the TB size restriction indicated by the indication.

5. The communication apparatus according to claim 3 or 4, wherein the indication of the TB size restriction includes a Boolean value indicating whether or not the TB size restriction is to be applied for the logical channel.

6. The communication apparatus according to claim 3 or 4, wherein the indication of the TB size restriction includes an integer value out of a plurality of integer values representing a plurality ranges of TB sizes selectable under the TB size restriction indicated by the indicator.

7. The communication apparatus according to claim 3 to 6, wherein the indication of the TB size restriction includes a threshold of TB sizes selectable under the TB size restriction.

8. The communication apparatus according to any of claims 1 to 7, wherein the TB size restriction per random access procedure type allows a greater TB size to be transmitted on the first random access procedure type than on the second random access procedure type, and the circuitry, in operation, selects the random access procedure type based on the size of the data of the logical channel.

9. The communication apparatus according to claim 8, wherein the configuration of the TB size includes, within a UE-specific per-logical-channel configuration, a Boolean value indicating whether or not the first random access procedure type is restricted.

10. The communication apparatus according to any of claims 1 to 9, the first random access procedure type being a two-step random access procedure and the second random access procedure type being a four-step random access procedure.

11. The communication apparatus according to any of claims 1 to 10, wherein the configuration of the TB size is received in RRC, Radio Resource Control, signaling.

12. The communication apparatus according to any of claims 1 to 10, wherein the transceiver, in operation, performs the transmission of the logical channel while the UE is in RRC_INACTlVE state.

13. A network node, comprising:
circuitry which, in operation, determines a configuration of a transport block, TB, size for data of a logical channel to be transmitted by a communication apparatus during a random access procedure, the configuration of the TB size including at least one of:
a TB size restriction per logical channel, and
a TB size restriction per random access procedure type out of a first random access procedure type and a second random access procedure type, the first random access procedure type having a lower number of transmission steps than the second random access procedure type; and
a transceiver which, in operation, transmits the configuration of the TB size for the data of the logical channel and receives the data of the logical channel, the TB size of the data of the logical channel complying with the transmitted configuration.

14. A communication method to be performed by a communication apparatus, comprising the steps of:
receiving a configuration of a transport block, TB, size for data of a logical channel to be transmitted during a random access procedure , the configuration of the TB size including at least one of:
a TB size restriction per logical channel, and
a TB size restriction per random access procedure type out of a first random access procedure type and a second random access procedure type, the first random access procedure type having a lower number of transmission steps than the second random access procedure type;
performing, based on the received configuration of the TB size, a selection of at least one of the TB size and the random access procedure type for transmission of the data of the logical channel; and
performing the transmission of the data of the logical channel in accordance with the selection.

15. A communication method to be performed by a network node, comprising the steps of:
determining a configuration of a transport block, TB, size for data of a logical channel to be transmitted by a communication apparatus during a random access procedure , the configuration of the TB size including at least one of:
a TB size restriction per logical channel, and
a TB size restriction per random access procedure type out of a first random access procedure type and a second random access procedure type, the first random access procedure type having a lower number of transmission steps than the second random access procedure type;
transmitting the configuration of the TB size for the data of the logical channel; and
receiving the data of the logical channel, the TB size of the data of the logical channel complying with the transmitted configuration.
